# EUROPÄISCHE PATENTSCHRIFT

(11) **EP 1 292 241 B1**
(45) Veröffentlichungstag und Bekanntmachung des Hinweises auf die Patenterteilung: **25.06.2008**
(21) Anmeldenummer: 01945295.2
(22) Anmeldetag: 22.06.2001
(51) Int. Cl.: A61C 13/00

(54) **VORRICHTUNG ZUR HERSTELLUNG VON DENTALEN WERKSTÜCKEN**
DEVICE FOR PRODUCING DENTAL WORKPIECES
DISPOSITIF DE FABRICATION DE PIECES DENTAIRES

(30) Priorität: 22.06.2000 DE 20010643 U; 01.08.2000 DE 10037531
(43) Veröffentlichungstag der Anmeldung: 19.03.2003
(73) Patentinhaber: 3M ESPE AG, 82229 Seefeld (DE)
(72) Erfinder: ALTHOFF, Olaf, 82234 Wessling (DE); SUTTOR, Daniel, 82229 Seefeld (DE); HOESCHELER, Stefan, 82211 Herrsching (DE); BEUSCHEL, Martin, 80639 München (DE)
(74) Vertreter: Viktor, Rainer
(86) Internationale Anmeldenummer: PCT/EP2001/007050
(87) Internationale Veröffentlichungsnummer: WO 2001/097707

(56) Entgegenhaltungen:
- EP-A- 0 391 446
- EP-A- 0 759 728
- DE-U- 29 815 486

## Beschreibung

Zahnersatzteile, wie Kronen, Brücken oder Implantate, und sonstige dentale Werkstücke werden üblicherweise so hergestellt, daß die gewünschte Form des Werkstücks von einem entsprechenden Modell optisch oder mechanisch abgetastet und die dabei gewonnenen Daten zur Erzeugung von Fräsbahnen verwendet werden. Anhand dieser Fräsbahnen wird dann aus einem Rohling das dentale Werkstück in einer Fräs- oder sonstigen geeigneten Bearbeitungsmaschine hergestellt.

Aus EP 0 759 728 B1 ist eine Vorrichtung bekannt, bei der der zur Herstellung einer Dentalprothese bestimmte Rohling in einen Ring aus Metall, Keramik oder hartem Kunststoff eingebettet wird. Der Rohling ist dort aus Kostengründen so bemessen, daß bei der Bearbeitung möglichst wenig Abfall an teurem Rohlingswerkstoff entsteht. Der generell zylindrische Rohling wird dabei in den Ring mittels eines Dentalklebers allseitig eingebettet und mit dem Ring in einen Tragkörper eingesetzt, der seinerseits in die Bearbeitungsmaschine eingespannt wird.

Es hat sich gezeigt, daß die allseitige Verklebung - insbesondere bei größeren Rohlingen zur Herstellung von Brücken - zu Spannungsrissen beim Fräsen führt, die im Rohling nicht ohne weiteres zu erkennen sind. Diese Risse können quer zur Längsachse durch den gesamten Rohling führen und das Werkstück damit unbrauchbar machen.

Der Effekt tritt auf, wenn nach dem Fräsen der Oberseite die Unterseite freigelegt wird und diese beiden Ebenen einander treffen. Da die Festigkeit des üblicherweise verwendeten Materials im Rohzustand nur ca. 20 bis 30 MPa beträgt und die der gewöhnlich benutzten Epoxidkleber im gleichen Bereich liegt, wirken auf einen rundum eingeklebten Rohling Kräfte in einem biaxialen Spannungsfeld, die je nach Klebefläche mehrere 100 N betragen können. Die beim Fräsen auftretenden Kerbwirkungen verstärken diesen Effekt, so daß die Festigkeit des Rohlingsmaterials überschritten wird und es zum Bruch quer zur Längsrichtung kommt.

Eine weitere Schwierigkeit bei der bekannten Vorrichtung besteht darin, daß bei der Verklebung an den zueinander parallelen Zylinderflächen von Rohling und Ring der Klebstoff unvermeidbar verläuft und an die zu bearbeitenden Flächenteile des Rohlings und damit an den Fräskopf gelangt; dadurch werden der Fräskopf verunreinigt und die Genauigkeit der Fräsung beeinträchtigt.

Diese Schwierigkeiten bestehen auch bei der aus DE 298 15 486 U1 bekannten, dem Oberbegriff der Ansprüche 1 und 8 entsprechenden Vorrichtung, sofern der Rohling dort allseitig in die zentrische Öffnung des plattenförmigen Tragkörpers eingeklebt wird.

Der Erfindung liegt die Aufgabe zugrunde, eine Vorrichtung zur Herstellung von dentalen Werkstücken anzugeben, die eine bessere Bearbeitung des Rohlings ermöglicht.

Die Lösung dieser Aufgabe ist in Anspruchen 1 und 8 gekennzeichnet. Durch die erfindungsgemäßen Lösungen werden die beschriebenen Spannungen und Mikrorisse weitgehend vermieden. Überraschend hat sich herausgestellt, daß die oben erläuterten Brüche nur in einem bei Rundum-Verklebung vorhandenen biaxialen Spannungsfeld auftreten.

Bei dem nach Anspruch 2 vorgesehenen Zwischenraum zwischen Rohling und der ihn umgebenden Ausnehmung im Tragkörper ergibt sich der Vorteil, daß der Rohling vom Werkzeug der Bearbeitungsmaschine seitlich angefahren werden kann. In diesem Zwischenraum kann der Fräskopf seine Arbeit unmittelbar beginnen, ohne zunächst bohrend in das Material eindringen zu müssen, wie das beim Stand der Technik der Fall ist. Da eine Bohrbearbeitung den Fräser überverhältnismäßig beansprucht und verschleißt, wird seine Standzeit durch die Maßnahme des Anspruchs 2 wesentlich erhöht. Darüber hinaus ist der Fräsvorgang schneller beendet, da langsame Eintauchbewegungen in das Rohlingsmaterial vermieden oder zumindest reduziert werden.

Die Ausgestaltungen der Erfindung nach den Ansprüchen 3 bis 6 verbessern die freie seitliche Zugänglichkeit des Rohlings.

Erfindungsgemäß besteht die Verbindung zwischen Rohling und Tragkörper in einer Verklebung. In diesem Fall ist die Maßnahme des Anspruchs 7 von Vorteil, weil sie die Möglichkeit einer Verschmutzung des Werkzeugs durch den Klebstoff weitgehend beseitigt.

Der Gegenstand der vorliegenden Anmeldung umfaßt neben den obenstehend aufgeführten Ausführungsformen, in denen die Verbindung zwischen Rohling und Tragkörper über eine Verklebung realisiert wird, gemäß Anspruch 8 auch solche Ausführungsformen, bei denen der Rohling mit dem Tragkörper dadurch verbunden ist, daß zwischen Rohling und dem Teil der Ansnehmung mindestens ein weiterer Körper angeordnet ist, der sowohl mit dem Rohling als auch mit dem Teil des Ausnehmung veklebt ist.

Das Material, aus dem der mindestens eine weitere Körper gefertigt ist, ist im wesentlichen frei wählbar und kann den Erfordernissen der Gesamtanordnung angepaßt werden. Beispielsweise ist es möglich, den mindestens einen weiteren Körper aus dem Material des Rohlings oder dem Material des Tragkörpers zu fertigen. Ebenso kann der mindestens eine weitere Körper aus zwei oder mehr Materialien gefertigt sein und beispielsweise schichtartig aufgebaut sein.

Ist der Rohling mit dem Tragkörper über zwei oder mehr weitere Körper verbunden, so können die zwei oder mehr weiteren Körper gleich oder voneinander verschieden sein, wobei die Unterschiede beispielsweise in der Geometrie oder/und den Materialien, aus denen die mindestens zwei weiteren Körper gefertigt sind, bestehen können.

Ebenso ist es möglich, den Rohling zur Realisierung einer Verbindungsstelle zuerst mit einem ersten weiteren Körper zu verbinden, der wiederum mit einem zweiten weiteren Körper verbunden ist, wobei letzterer mit dem Tragkörper verbunden ist. Selbstverständlich können gemäß dieser Ausführungsform auch drei oder mehr weitere Körper als Verbindung zwischen Rohling und Tragkörper dienen, wobei die Verbindungen zwischen den weiteren Körpern untereinander und die Verbindung zwischen einem der weiteren Körper und dem Rohling beziehungsweise dem Tragkörper eine Verklebung darstellt.

Unter anderem bevorzugt ist eine Ausführungsform, gemäß der der Rohling an zwei gegenüberliegenden Seiten mit jeweils einem weiteren Körper verbunden ist, wobei jeder der weiteren Körper mit seiner der der Verbindungsseite mit dem Rohling gegenüberliegenden Seite mit dem Tragkörper verbunden ist. Weiter bevorzugt ist eine Ausführungsform, in der diese beiden weiteren Körper aus dem Material des Tragkörpers gefertigt sind. Die beiden weiteren Körper sind mit dem Rohling durch eine Verklebung verbunden.

Die Maßnahme des Anspruchs 9 bedeutet einen wirksamen Schutz des Rohlings gegen mechanische Einflüsse. Da der Tragkörper allein die äußere Form der aus Rohling und Tragkörper gebildeten Einheit bestimmt, läßt er sich ohne Beschränkung so gestalten, daß er unabhängig von der genauen Rohlingsform mit weiteren Einheiten gestapelt werden kann und ein automatisches Beschicken, Entnehmen und Wenden im Zuge einer automatischen Fertigung gestattet.

In der Weiterbildung der Erfindung nach Anspruch 10 bietet der Tragkörper genügend Platz zum Anbringen einer Codierung, wobei die Bearbeitungsmaschine so gesteuert werden kann, daß sie anhand des abgetasteten Codes automatisch den für den in dem Tragkörper enthaltenen Rohling richtigen Bearbeitungsvorgang mit dem richtigen Werkzeug durchführt, beispielsweise den generierten Fräsbahnen folgt oder bei fehlender Übereinstimmung den Bearbeitungsvorgang unterdrückt.

Nach Anspruch 11 kann der Code durch die Bearbeitungsmaschine, beispielsweise durch den Fräser, verändert oder auch entfernt werden. Dies hat den Vorteil, daß eine versehentliche doppelte Bearbeitung des gleichen Rohlings verhindert wird. Gleichzeitig läßt sich sicherstellen, daß nur Original-Rohlinge, wie sie vom Hersteller samt Tragkörper geliefert werden, bearbeitet werden können, während etwa benutzte, erneut mit Rohlingen bestückte Tragkörper abgewiesen werden.

Die nach Anspruch 12 vorgesehene Plattenform des Tragkörpers ist für die automatische Handhabung und Stapelung im Rahmen beispielsweise einer Magazinierbarkeit besonders günstig.

Die Weiterbildung der Erfindung nach Anspruch 13 gewährleistet die ordnungsgemäße Orientierung des Tragkörpers samt Rohling in der Bearbeitungsmaschine.

Das Merkmal des Anspruchs 14 ist vom Standpunkt der Material- und Herstellkosten für den Tragkörper von Interesse.

Ausführungsbeispiele der Erfindung werden nachstehend anhand der Zeichnungen näher erläutert. Darin zeigen
- Figur 1: eine Draufsicht auf einen Tragkörper;
- Figuren 2 bis 4: Varianten des Tragkörpers nach Figur 1 in schematischen Darstellungen;
- Figur 5: eine Draufsicht auf einen Tragkörper gemäß einem anderen Ausführungsbeispiel;
- Figur 6: einen Schnitt durch den Tragkörper gemäß der Linie VI-VI in Figur 5; und
- Figur 7: eine Draufsicht auf einen Tragkörper gemäß einem anderen Ausführungsbeispiel.

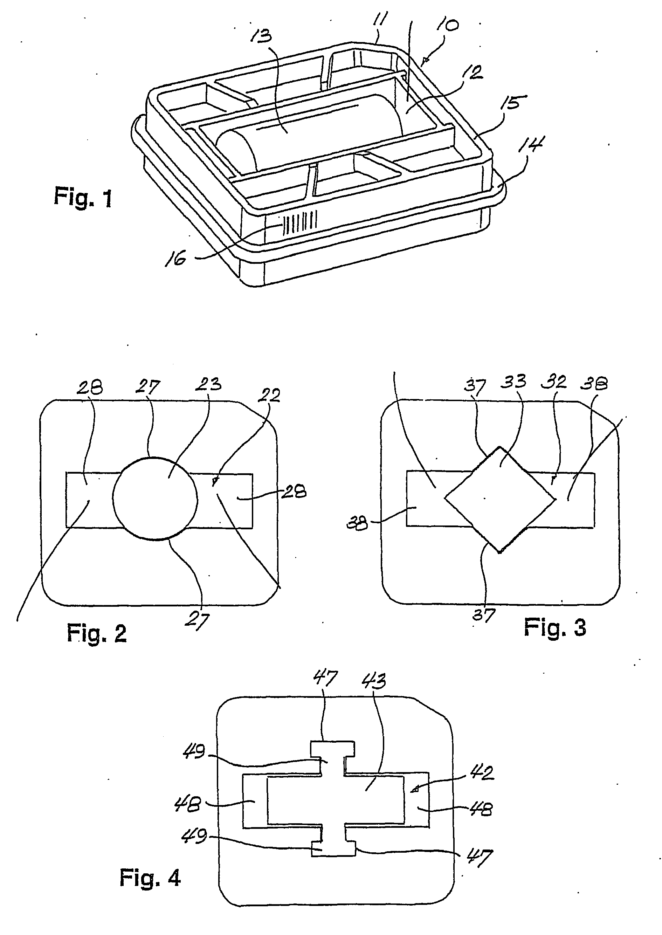

Der in Figur 1 gezeigte, als Kunststoff-Spritzteil hergestellte Tragkörper **10** ist im wesentlichen plattenförmig mit planparallelen rechteckigen Flächen und gegenüber deren Seiten geringerer Höhe. Ein Eckbereich **11** ist abgeschrägt, um die Orientierung des Tragkörpers **10** feststellen zu können.

Eine mittige rechteckige Ausnehmung **12** dient zur Aufnahme eines in diesem Ausführungsbeispiel zylindrischen Rohlings **13** für dentale Werkstücke. Der Rohling **13** ist an zwei einander gegenüberliegenden. Flächen mit den entsprechenden Wänden der Ausnehmung **12** verklebt.

Zwischen den beiden anderen Wänden der Ausnehmung **12** und den ihnen zugewandten Stirnflächen des Rohlings **13** besteht ein Zwischenraum, in den der Fräskopf zu Beginn des Bearbeitungsvorgangs eingeführt werden kann.

An seiner Außenseite ist der Tragkörper **10** mit einem umlaufenden Wulst **14** versehen, der zum Einschieben in Führungsnuten der Bearbeitungsmaschine dient.

Die größte Dicke hat der Tragkörper **10** im Bereich seiner äußeren Umfangswand **15.** Diese Dicke ist so bemessen, daß sie die Abmessung des Rohlings **13** überragt, so daß dieser in sämtlichen Richtungen gegen mechanische Beschädigung geschützt ist.

Die Umfangswand **15** trägt einen Strichcode **16**, der unmittelbar oder auf einen aufgeklebten Streifen aufgedruckt oder in das Material des Tragkörpers **10** eingeformt sein kann. Der Strichcode **16** dient zur ldentifizierung von Material, Abmessungen und/oder sonstigen Eigenschaften des in dem Tragkörper **10** enthaltenen Rohlings **13.**

In dem Ausführungsbeispiel nach Figur 1 sind die mit den Wänden der Ausnehmung **12** verklebten Flächen des Rohlings **13** zylindrisch. Dies bewirkt, daß der Klebstoff die vom Fräskopf zu bearbeitenden Flächen nicht oder kaum erreichen kann. Die gleiche Wirkung wird erzielt, wenn die Klebeflächen des Rohlings plan und am Übergang zu den nach oben und unten freiliegenden Flächen abgeschrägt sind. Die sich bei dieser Gestaltung ergebenden definierten rechteckigen Verbindungszonen sind im Hinblick auf eine Verringerung der eingangs erläuterten Spannungsrisse vorteilhaft.

Anstelle der in Figur 1 gezeigten rein rechteckigen Gestalt kann die Ausnehmung auch eine der in Figuren 2 bis 4 gezeigten Formen haben. In diesen Fällen weisen die einander gegenüberliegenden längeren Flächen der Ausnehmung **22, 32, 42** jeweils einen erweiterten Bereich **27, 37, 47** auf, in dem der Rohling **23, 33, 43** befestigt ist. In den übrigen Bereichen **28, 38, 48** der Ausnehmung **22, 32, 42** liegt der Rohling **23, 33, 43** mit entsprechendem Abstand von den Wänden der jeweiligen Ausnehmung **22, 32, 42** frei und ist somit für das Bearbeitungswerkzeug gut zugänglich.

Bei der Gestaltung nach Figur 4 weist der der Rohling **43** an zwei gegenüberliegenden Flächen pilzförmige Ansätze **49** für komplementär geformte erweiterte Bereiche **47** der Ausnehmung **42** auf.

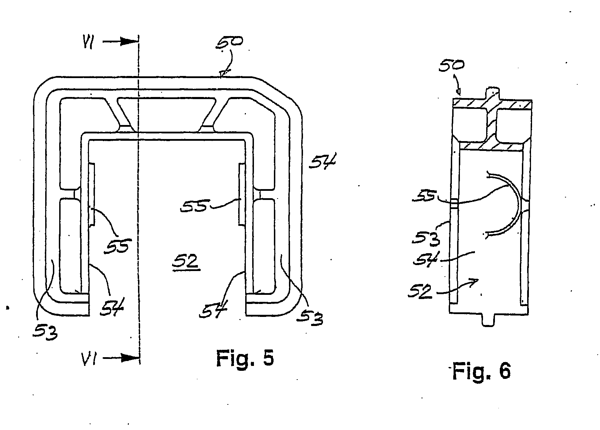

Bei dem Ausführungsbeispiel nach Figuren 5 und 6 ist der Tragkörper **50** U-förmig gestaltet, so daß die Ausnehmung **52** an einer Seite nach außen offen ist. Der (nicht gezeigte) in diesem Fall zylindrisch angenommene Rohling wird zwischen den Schenkeln **53** der U-Form eingeklebt. Zur Positionierung und zusätzlichen Halterung sind an den Innenwänden **54** der Schenkel **53** etwa halbzylindrische Leisten **55** vorgesehen, in die der Rohling eingelegt wird.

Die gezeigte U-Form verleiht dem Tragkörper **50** trotz seiner insgesamt weitgehend starren Beschaffenheit eine gewisse Flexibilität, die sowohl für das Einlegen und Herausnehmen des Tragkörpers als auch im Hinblick auf die Vermeidung von unerwünschten Spannungen am Rohling günstig ist.

Falls wegen der U-Form an der bei Zuführung zur Bearbeitungsmaschine vorderen Fläche der Umfangswand kein Platz für eine Codierung ist, kann diese an einem separaten (nicht gezeigten) Trägerstreifen vorgesehen sein, der die offene Seite der U-Form überbrückend an dem Tragkörper **50** angebracht wird, ohne dessen mechanische oder sonstigen Eigenschaften zu verändern.

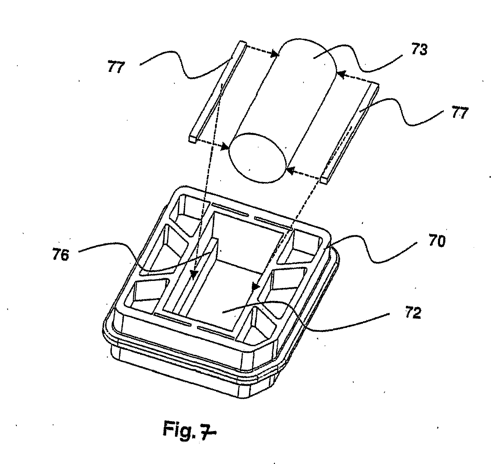

Die Variante nach Figur 7 zeigt einen Tragkörper **70**, der eine Ausnehmung **72** aufweist, die an zwei gegenüberliegenden Seitenwänden Stufen **76** umfaßt. Auf der Oberkante der Stufen **76** werden die beiden quaderförmigen weiteren Körper **77** mit ihrer Unterkante befestigt, die ihrerseits mit jeweils einer Seitenkante an zwei gegenüberliegenden Seitenflächen des Rohlings **73** befestigt werden. Bei dieser Ausführungsform erfolgt ein Verkleben der weiteren Körper **77** mit dem Rohling **73** und eine Verklebung der Unterkanten der weiteren Körper **77** mit den Oberkanten der Stufen **76** der Seitenwände der Ausnehmung **72.**

## Patentansprüche

1. Vorrichtung zur Herstellung dentaler Werkstücke mit einem Rohling (**13; 23; 33; 43; 73**) und einem Tragkörper (**10; 50; 60; 70**), der eine den Rohling (**13; 23; 33; 43; 73**) mindestens teilweise umgebende Ausnehmung **(12; 22; 32; 42**; **52; 72)** aufweist und mit seiner Außenseite in eine Bearbeitungsmaschine einspannbar ist, **dadurch gekennzeichnet, daß** der Rohling (**13; 23; 33; 43; 73)** nur an zwei einander gegenüberliegenden Seiten mit nur einem Teil der Ausnehmung **(12; 22; 32; 42; 52; 72)** verklebt ist.

2. Vorrichtung nach Anspruch 1, **dadurch gekennzeichnet, daß** der Rohling **(13; 23; 33; 43; 73**) in Abstand von dem nicht mit ihm verbundenen Teil der Ausnehmung **(12; 22; 32; 42; 52; 72**) angeordnet ist.

3. Vorrichtung nach einem der vorhergehenden Ansprüche, **dadurch gekennzeichnet, daß** der Tragkörper **(50; 60)** generell U-förmig gestaltet und der Rohling mit den Schenkeln **(53; 63)** der U-Form verklebt ist.

4. Vorrichtung nach Anspruch 3, **dadurch gekennzeichnet, daß** an den Schenkeln **(53; 63)** des Tragkörpers **(50; 60)** Halterungen **(55; 65)** zur Aufnahme gegenüberliegender Enden des Rohlings angeformt sind.

5. Vorrichtung nach Anspruch 4, **dadurch gekennzeichnet, daß** die Halterungen als Vorsprünge **(55)** an den Innenwänden oder Vertiefungen **(65)** in den Innenwänden der Schenkel **(53; 63)** ausgebildet sind.

6. Vorrichtung nach einem der Ansprüche 1 bis 3, **dadurch gekennzeichnet, daß** die Ausnehmung **(22; 32; 42)** einander gegenüberliegende erweiterte Bereiche **(27; 37; 47)**, mit denen der Rohling **(23; 33; 43)** verklebt ist, sowie weitere von dem Rohling **(23; 33; 43)** in Abstand angeordnete Bereiche **(28; 38; 48)** aufweist.

7. Vorrichtung nach Anspruch 1, **dadurch gekennzeichnet, daß** die Klebeflächen des Rohlings **(13)** am Übergang zu den freiliegenden Seitenflächen gewölbt oder abgeschrägt sind.

8. Vorrichtung zur Herstellung dentaler Werkstücke mit einem Rohling (**73**) und einem Tragkörper (70), der eine der Rohling (73) mindestens teilweise umgebende Ausnehmung (72) aufweist und mit seiner Außenseite in eine Dearbeitungsmaschine einsparnbar ist, **dadurch gekennzeichnet, daß** der Rohling nur an zwei einander gegenüberliegenden Seiten mit nur einem teil der Ausnehmung verbunden ist, wobei die Verbindung zwischen Ansnehmung (**72**) und Rohling (**73**) **dadurch** realisiert wird, daß zwischen Rohling (**73**) und den Teil der Ausnehmung (**72**) mindestens ein weiterer Körper (**77**) angeordnet ist, der sowohl mit dem Rohling als auch mit dem Teil der Ausnehmung verklebt ist.

9. Vorrichtung nach einem der vorhergehenden Ansprüche, **dadurch gekennzeichnet, daß** der Tragkörper (**10; 50; 60; 70**) so bemessen ist, daß ihn der Rohling (**13; 23**; **33; 43; 73)** in keiner Richtung überragt.

10. Vorrichtung nach einem der vorhergehenden Ansprüche, **dadurch gekennzeichnet, daß** der Tragkörper **(10; 50; 60; 70)** einen auf den Rohling **(13; 23; 33; 43; 73)** bezogenen Code **(16)** trägt.

11. Vorrichtung nach Anspruch 10, **dadurch gekennzeichnet, daß** der Code **(16)** von der Bearbeitungsmaschine veränderbar ist.

12. Vorrichtung nach einem der vorhergehenden Ansprüche, **dadurch gekennzeichnet, daß** der Tragkörper (10; 50; 60; 70) im wesentlichen die Form einer Platte hat, deren parallele große Flächen senkrecht zu den mit dem Rohling (**13; 23; 33; 43; 73**) verbundenen Flächen stehen.

13. Vorrichtung nach einem der vorhergehenden Ansprüche, **dadurch gekennzeichnet, daß** die Außenseite (**15**) des Tragkörpers (**10; 50; 60; 70**) nicht-symmetrisch geformt ist.

14. Vorrichtung nach einem der vorhergehenden Ansprüche, **dadurch gekennzeichnet, daß** der Tragkörper (**10; 50; 60; 70**) ein Kunststoff-Spritzteil ist.

## Claims

1. Device for producing dental workpieces with a blank (13; 23; 33; 43; 73) and with a support body (10; 50; 60; 70) which has a recess (12; 22; 32; 42; 52; 72) at least partially surrounding the blank (13; 23; 33; 43; 73) and can be clamped with its outside into a machine tool, **characterized in that** the blank (13; 23; 33; 43; 73) is adhesive-bonded on only two opposite sides to only part of the recess (12; 22; 32; 42; 52; 72).

2. Device according to Claim 1, **characterized in that** the blank (13; 23; 33; 43; 73) is arranged at a distance from that part of the recess (12; 22; 32; 42; 52; 72) not connected to it.

3. Device according to one of the preceding Claims, **characterized in that** the support body (50; 60) is of generally U-shaped design and the blank is adhesive-bonded to the branches (53; 63) of the U-shape.

4. Device according to Claim 3, **characterized in that** holders (55; 65) for receiving opposite ends of the blank are integrally formed onto the branches (53; 63) of the support body (50; 60).

5. Device according to Claim 4, **characterized in that** the holders are designed as projections (55) on the inner walls or as depressions (65) in the inner walls of the branches (53; 63).

6. Device according to one of Claims 1 to 3, **characterized in that** the recess (22; 32; 42) has widened areas (27; 37; 47), which lie opposite one another and with which the blank (23; 33; 43) is adhesive-bonded, and it has further areas (28; 38; 48) arranged at a distance from the blank (23; 33; 43) .

7. Device according to Claim 1, **characterized in that** the adhesive surfaces of the blank (13) are curved or beveled at the transition to the exposed side faces.

8. Device for producing dental workpieces with a blank (73) and with a support body (70) which has a recess (72) at least partially surrounding the blank (73) and can be clamped with its outside into a machine tool, **characterized in that** the blank is connected on only two opposite sides to only one part of the recess, the connection between recess (72) and blank (73) being realized by arranging at least one further body (77) between blank (73) and part of the recess (72), which further body (77) is adhesive-bonded to the blank and also to part of the recess.

9. Device according to one of the preceding Claims, **characterized in that** the support body (10; 50; 60; 70) is dimensioned so that the blank (13; 23; 33; 43; 73) does not extend beyond it in any direction.

10. Device according to one of the preceding Claims, **characterized in that** the support body (10; 50; 60; 70) carries a code (16) which relates to the blank (13; 23; 33; 43; 73).

11. Device according to Claim 10, **characterized in that** the code (16) can be changed by the machine tool.

12. Device according to one of the preceding Claims, **characterized in that** the support body (10; 50; 60; 70) has substantially the shape of a plate whose parallel large surfaces are perpendicular to the surfaces connected to the blank (13; 23; 33; 43; 73).

13. Device according to one of the preceding Claims, **characterized in that** the outside (15) of the support body (10; 50; 60; 70) is shaped so as to be asymmetrical.

14. Device according to one of the preceding Claims, **characterized in that** the support body (10; 50; 60; 70) is a plastic injection-molded part.

## Revendications

1. Dispositif de fabrication de pièces dentaires, qui présente une ébauche (13; 23; 33; 43; 73) et un corps de support (10; 50; 60; 70) doté d'une découpe (12; 22; 32; 42; 52; 72) qui entoure au moins une partie de l'ébauche (13; 23; 33; 43; 73) et dont le côté extérieur peut être serré dans une machine d'usinage, **caractérisé en ce que** l'ébauche (13; 23; 33; 43; 73) n'est collée qu' à une partie de la découpe (12; 22; 32; 42; 52; 72) uniquement sur deux côtés mutuellement opposés.

2. Dispositif selon la revendication 1, **caractérisé en ce que** l'ébauche (13; 23; 33; 43; 73) est disposée à distance de la partie de la découpe (12; 22; 32; 42; 52; 72) qui ne lui est pas reliée.

3. Dispositif selon l'une des revendications précédentes, **caractérisé en ce que** le corps de support (50; 60) a globalement la forme d'un U et l'ébauche est collé aux branches (53; 63) de la forme en U.

4. Dispositif selon la revendication 3, **caractérisé en ce que** des supports (55; 65) de reception des extrémités opposées de l'ébauche sont formés sur les branches (53; 63) du corps de support (50; 60).

5. Dispositif selon la revendication 4, **caractérisé en ce que** les supports sont configurés comme saillies (55) ménagées sur les parois intérieures ou comme creux (65) ménagés sur les parois intérieures des branches (53; 63).

6. Dispositif selon l'une des revendications 1 à 3, **caractérisé en ce que** la découpe (22; 32; 42) présente des régions opposées évasées (27; 37; 47) sur lesquelles l'ébauche (23; 33; 43) est collée, ainsi que d'autres régions (28; 38; 48) disposées à distance de l'ébauche (23; 33; 43).

7. Dispositif selon la revendication 1, **caractérisé en ce que** les surfaces adhésives de l'ébauche (13) sont bombées ou chanfreinées à la transition vers les surfaces latérales libres.

8. Dispositif de fabrication de pièces dentaires qui présente une ébauche (73) et un corps de support (70) doté d'une découpe (72) qui entoure au moins une partie de l'ébauche (73) et dont le côté extérieur peut être serré dans une machine d'usinage, **caractérisé en ce que** l'ébauche est reliée uniquement à une partie de la découpe, uniquement sur deux côtés mutuellement opposés, la liaison entre la découpe (72) et l'ébauche (73) étant réalisée en disposant entre l'ébauche (73) et la partie de la découpe (72) au moins un autre corps (77) qui est collé à la fois à l'ébauche et à la partie de la découpe.

9. Dispositif selon l'une des revendications précédentes, **caractérisé en ce que** le corps de support (10; 50; 60; 70) est dimensionné de telle sorte que l'ébauche (13; 23; 33; 43; 73) n'en déborde dans aucune direction.

10. Dispositif selon l'une des revendications précédentes, **caractérisé en ce que** le corps de support (10; 50; 60; 70) porte un code (16) relatif à l'ébauche (13; 23; 33; 43; 73).

11. Dispositif selon la revendication 10, **caractérisé en ce que** le code (16) peut être modifié par la machine d'usinage.

12. Dispositif selon l'une des revendications précédentes, **caractérisé en ce que** le corps de support (10; 50; 60; 70) a essentiellement la forme d'une plaque dont les grandes surfaces parallèles sont perpendiculaires aux surfaces reliées à l'ébauche (13; 23; 33; 43; 73).

13. Dispositif selon l'une des revendications précédentes, **caractérisé en ce que** le côté extérieur (15) du corps de support (10; 50; 60; 70) a une forme asymétrique.

14. Dispositif selon l'une des revendications précédentes, **caractérisé en ce que** le corps de support (10; 50; 60; 70) est une pièce en matière synthétique moulée par injection.
